# FASCICULE DE BREVET EUROPEEN

(11) **EP 2 809 698 B1**
(45) Date de publication et mention de la délivrance du brevet: **27.01.2016**
(21) Numéro de dépôt: 13702040.0
(22) Date de dépôt: 30.01.2013
(51) Int. Cl.: C08F 293/00, C08F 2/12, C08F 214/00, C08F 220/10, C08F 228/00, C08F 230/02, C09J 153/00, C09D 153/00, C08F 14/08, C08F 2/20, C08F 2/38, C08F 214/22, C08L 27/08, C08F 214/08

(54) **POLYMÉRISATION EN PHASE DISPERSÉE DE MONOMÈRES VINYLIQUES HALOGÉNÉS EN PRÉSENCE DE STABILISANTS RÉACTIFS VIVANTS**
POLYMERISATION VON HALOGENIERTEN VINYLMONOMEREN IN DER DISPERGIERTEN PHASE IN ANWESENHEIT VON LEBENDEN REAKTIVEN STABILISATOREN
DISPERSED PHASE POLYMERISATION OF HALOGENATED VINYL MONOMERS IN THE PRESENCE OF LIVE REACTIVE STABILISERS

(30) Priorité: 31.01.2012 FR 1200292; 18.10.2012 FR 1202795
(43) Date de publication de la demande: 10.12.2014
(73) Titulaire: Rhodia Operations, 75009 Paris (FR)
(72) Inventeur: DESTARAC, Mathias, F-31100 Toulouse (FR); WILSON, James, F-60580 Coye La Foret (FR)
(74) Mandataire: Benvenuti, Federica
(86) Numéro de dépôt international: PCT/EP2013/051793
(87) Numéro de publication internationale: WO 2013/113752

(56) Documents cités:
- EP-A1- 1 514 884
- WO-A1-03/097704
- WO-A1-2010/083569

## Description

La présente invention a trait au domaine des polymérisations mettant en oeuvre des monomères au sein d'une phase liquide dispersée dans une phase liquide continue (polymérisation en phase dispersée), incluant notamment les polymérisations en émulsion. Plus précisément, l'invention concerne des polymérisations de ce type mettant en oeuvre des agents de stabilisation de la phase dispersée particuliers, dits « stabilisants réactifs ».

On connaît diverses réactions de polymérisation mettant en oeuvre des monomères à l'état de gouttelettes dispersées dans une phase continue (généralement une phase aqueuse) avec des agents de stabilisation de type stabilisants réactifs.

De façon générale, le stabilisant réactif mis en oeuvre dans ces réactions est une molécule qui permet d'une part de stabiliser les gouttelettes de la phase dispersée contenant les monomères et qui est en outre propre à être engagé dans la réaction de polymérisation. De tels stabilisants réactifs présentent, entre autres, l'avantage de se substituer en tout ou partie aux tensioactifs additionnels qu'il est sinon nécessaire de mettre en oeuvre pour stabiliser la phase dispersée et ils conduisent de ce fait à des dispersions de polymères (latex) intéressants en ce sens qu'ils sont exempts de tels tensioactifs ou tout au moins en ce qu'ils présentent une teneur réduite en de tels réactifs.

De tels stabilisants réactifs ont notamment été proposés pour réaliser des polymérisations en émulsion de monomères hydrophobes de type vinylique, qui sont des molécules à caractère hydrophile ou amphiphile comprenant typiquement une chaîne polymère hydrophile et un groupement réactif propre à induire une réaction de polymérisation radicalaire contrôlée des monomères, par exemple de type ATRP (atom transfer radical polymerization) ou NMP (nitroxide-mediated polymerization), ou RAFT ou MADIX en présence de radicaux libres, avec par exemple un groupe de type xanthate (porteur de fonctions -S(C=S)O-) en extrémité de chaîne. Ces stabilisants réactifs assurent d'une part la stabilisation de l'émulsion des gouttelettes de la phase dispersée du fait de leur caractère hydrophile, et ils assurent d'autre part le rôle d'agent de contrôle de la polymérisation, typiquement par des processus de transfert réversible par addition-fragmentation, ce par quoi les chaînes polymères croissent à partir de cet agent de contrôle par consommation progressive des monomères contenus dans chaque gouttelette, selon un processus bien connu en soi, où les chaînes polymères présentent un caractère dit « vivant », en ce sens que chaque étape d'incorporation d'une unité monomère dans la chaîne conduit à un polymère qui reste porteur d'une extrémité de chaîne réactivable pour l'incorporation ultérieure d'une autre unité monomère selon le même processus d'addition-fragmentation (pour plus de détail concernant la polymérisation radicalaire contrôlée ou « vivante » et l'obtention de chaînes croissant à partir de l'agent de transfert, on pourra notamment se reporter à Handbook of RAFT polymerisation, Ed Barner-Kowollik C. Wiley-VCH 2008 ou bien encore aux procédés décrits dans WO96/30421, WO 98/01478, WO 99/35178, WO 98/58974, WO 00/75207 et WO 01/42312, WO 99/35177 ,WO 99/31144, FR2794464 ou WO 02/26836).

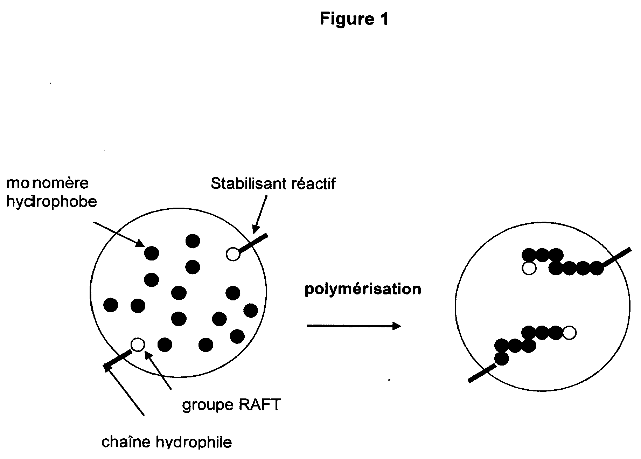

Avec les stabilisants réactifs du type précité, qui induisent une polymérisation radicalaire contrôlée, on obtient la formation des chaînes polymères vivantes au sein des gouttelettes dispersées, avec une incorporation de l'agent stabilisant au sein de ces chaînes polymère et ce dès le début de la polymérisation, mais en conservant néanmoins une stabilisation de l'émulsion tout au long de la polymérisation sans nécessairement avoir à employer de tensioactif additionnel, la chaîne hydrophile restant schématiquement en permanence à la périphérie des gouttelettes, comme illustré sur la Figure 1 ci-annexée.

Des stabilisants réactifs du type précité ont notamment été proposés dans les procédés décrits dans les publications suivantes :
**Nitroxide-Mediated Controlled/Living Free-Radical Surfactant-Free Emulsion Polymerization of Methyl Methacrylate using a Poly(Methacrylic Acid)-based Macroalkoxyamine Initiator.** C. Dire, S. Magnet, L. Couvreur, B. Charleux Macromolecules 42(1), 95-103 (2009)
**PEO-based Block Copolymers and Homopolymers as Reactive Surfactants for AGET ATRP of Butyl Acrylate in Miniemulsion.** W. Li, K. Min, K. Matyjaszewski, F. Stoffelbach, B. Charleux Macromolecules 41, 6387-6392 (2008)
**Effective ab Initio Emulsion Polymerization under RAFT Control** Christopher J. Ferguson, Robert J. Hughes, Binh T. T. Pham, Brian S. Hawkett, Robert G. Gilbert, Algirdas K. Serelis, and Christopher H. Such Macromolecules (2002)
**Surfactant-free controlled/living radical emulsion (co)polymerization of n-butyl acrylate and methyl methacrylate via RAFT using amphiphilic poly(ethylene oxide)-based trithiocarbonate chain transfer agents.** J. Rieger, G. Osterwinter, C. Bui, F. Stoffelbach, B. Charleux Macromolecules (2009)

Bien qu'intéressants dans l'absolu, une des limitations des stabilisants réactifs décrits jusqu'à présent est qu'ils sont adaptés uniquement à la polymérisation de certains monomères vinyliques, essentiellement de type méthacrylate et acrylate d'alkyle.

Un but de la présente invention est de fournir un procédé de polymérisation en phase dispersée adapté à la mise en oeuvre d'un grand nombre de monomères hydrophobes et notamment adapté à la polymérisation en phase dispersée de monomères N-vinyliques hydrophobes.

A cet effet, les inventeurs ont mis en évidence l'intérêt de la mise en oeuvre d'un nouveau type de stabilisant réactif, à savoir une chaîne de polymère vivante issue d'une polymérisation radicalaire contrôlée RAFT ou MADIX de monomères N-(vinyl lactame).

Plus précisément, les inventeurs ont mis en évidence un procédé de préparation d'un polymère comprenant une étape de polymérisation en phase dispersée en présence d'un stabilisant réactif, dans laquelle on met en présence au sein d'une phase aqueuse :
- au moins un monomère éthyléniquement insaturé, en général à l'état dispersé ;
- au moins une source de radicaux libres ; et
- un stabilisant réactif comprenant une chaîne polymère incluant (voire consistant en) des unités monomères N-(vinyl lactame) et un groupe thiocarbonylthio -S(C=S)-,
ladite étape étant de préférence conduite à une température inférieure à la température de dégradation du groupe thiocarbonylthio -S(C=S)- du stabilisant réactif, de préférence à une température inférieure à 40°C, par exemple à une température inférieure ou égale à 30°C (le procédé pouvant par exemple être avantageusement conduit à température ambiante.

Selon un mode de réalisation, les monomères hydrophobes employés peuvent comprendre des composés vinyliques halogénés, tels que des chlorures ou fluorures de vinyle ou de vinylidene, répondant à la formule R_{b}R_{c}C=CX¹X²,
où: X¹ = F ou Cl
X² = H, F ou Cl
chacun de R_{b} et R_{c} représente, indépendamment :
   - H, Cl, F ; ou
   - un groupe alkyle, de préférence chloré et /ou fluoré, plus avantageusement perchloré ou perfluoré.

Les inventeurs ont par ailleurs mis en évidence que la polymérisation en phase dispersée des composés vinyliques halogénés précités peut être obtenue, de façon plus générale, avec des stabilisants réactifs comportant un groupe thiocarbonylthio -S(C=S)-analogues à ceux de la présente invention, mais qui contiennent une chaîne polymère autre qu'une chaîne comprenant des unités monomères (N-vinyl lactame), ou bien une chaîne comprenant moins de 50%, voire moins de 30% d'unités monomères (N-vinyl lactame).

Plus précisément, les inventeurs ont mis en évidence un procédé intéressant de polymérisation en phase dispersée de composés vinyliques halogénés, répondant à la formule R_{b}R_{c}C=CX¹X²,
où: X¹ = F ou Cl
X² = H, F ou Cl
chacun de R_{b} et R_{c} represente, indépendamment :
   - H, CI, F ; ou
   - un groupe alkyle, de préférence chloré et /ou fluoré, plus avantageusement perchloré ou perfluoré,
comprenant une étape (E1), où ces monomères sont introduits au sein d'une phase aqueuse, en général à l'état dispersé, ensemble avec
- au moins une source de radicaux libres ; et
- au moins un stabilisant réactif dit ci-après « SR2 » qui comprend une chaîne polymère et un groupe thiocarbonylthio -S(C=S)-, cette chaîne polymère comprenant des unités monomères non (N-vinyl lactame), ces unités monomères étant de préférence choisies parmi :
   - les monomères hydrophiles de type acrylate, comme par exemple l'acide acrylique et ses sels tel que acrylate de sodium ainsi que les esters de l'acide acrylique soluble dans l'eau, comme par exemple l'acrylate de 2-hydroxy ethyl ou les acrylates d'oligo ou polyéthylène glycol.
      les monomères hydrophiles de type acrylamido comme par exemple l'acrylamide, dimethyl acrylamide, 2-acrylamido-2-methyl-1-propane sulfonique acide et ses sels, acrylamido propyl trimethyl ammonium chloride (APTAC), diméthyl aminopropyl acrylamide, NN-diethyl acrylamide, N-isopropyl acrylamide, N-morpholine acrylamide, N-hydroxy ethyl acrylamide.
   - les monomères hydrophiles de type methacrylate par exemple l'acide methacrylique et ses sels tel que le methacrylate de sodium ainsi que les methacrylate d'oligo ou polyéthylène glycol, 3-[N-(3-methacrylate de propyl)-N,N-dimethyl]ammoniopropane sulfonate), hydroxyethyl methacrylate.
   - les monomères hydrophiles de type methacrylamido comme par exemple le methacrylamide, 3-[N-(3-methacrylamidopropyl)-N,N-dimethyl]ammoniopropane sulfonate)) (SPP), [(3-methacrylamidopropyl)-N,N-trimethyl ammonium chloride (MAPTAC).
   - les monomères hydrophiles de type vinylique par exemple acide vinyl phosphonique, vinyl sulphonate de sodium, 2-vinyl pyridine, 4-vinyl pyridine, et ses versions quaternisées et imidazole de vinyle
   - les monomères hydrophiles de type allylique par exemple le chlorure de diallyldiméthylammonium (DADMAC), le diallyl de dimethylammoniummethyl phosphonate (DALP).
La chaîne polymère comprenant des unités monomères non (N-vinyl lactame) peut éventuellement comprendre des unités monomères (N-vinyl lactame), à raison de moins de 50%, voire moins de 30%.

Ce procédé constitue l'objet de la présente invention.

Avec les monomères halogénés précités, un des avantages du procédé se révèle particulièrement intéressant, à savoir la possibilité de substituer les tensioactifs nécessaires en polymérisation en phase dispersée par les agents réactifs de l'invention. En effet, classiquement, la polymérisation en phase dispersée de monomères halogénés du type précité implique la mise en oeuve de tensioactifs halogénés, le plus souvent fluorés, tels que les fluoroamphipiles du type des sels d'ammonium de l'acide perfluorooctanesulfonique (PFOS), de l'acide perfluorooctanoique (PFOA) ou de l'acide perfluorononanoique (PFNA) dont l'utilisation est de plus en plus controversée, du fait de leur profil toxicologique (toxicité associée à une rémanence).

L'invention permet de fournir des latex fluorés où les tensioactifs de ce type sont substitués au moins en partie, de préférence en totalité, par des stabilisants réactifs selon l'invention. Dans ce cadre, les stabilisants réactifs employés peuvent être halogénés ou fluorés (par exemple, on peut utiliser des stabilisants réactifs porteurs de groupes fluorés ou chlorés) mais contrairement aux procédés usuels de polymérisation en phase dispersée, le procédé de l'invention, qui emploie des stabilisants *réactifs,* conduit à une immobilisation des stabilisants sur les particules de polymères, et ne conduit donc pas aux effets de relargage de tensioactifs qui peuvent être observés avec les latex fluorés usuels. L'invention autorise donc dans ce cadre l'emploi de stabilisants fluorés avec des impacts réduits en termes de toxicité.

Par ailleurs, le procédé de l'invention permet d'accéder à une polymérisation contrôlée des monomères précités particulièrement efficace et inédite des monomères halogénés précités.

La source de radicaux libres employée dans l'étape (E1) est de préférence un initiateur de polymérisation de type redox. Plus généralement, il peut s'agir de tout initiateur capable de générer des radicaux libres dans les conditions de l'étape (E1), de préférence à une température inférieure à 40°C, plus avantageusement à une température inférieure ou égale à 30°C.

La polymérisation en phase dispersée réalisée dans le cadre de l'invention est, en général, une polymérisation qui conduit, en fin de réaction à une émulsion ou une dispersion du polymère synthétisé dans la phase aqueuse.

Pour ce faire, selon un premier mode de réalisation, les monomères peuvent typiquement être mis en oeuvre à l'état dispersé au sein de la phase aqueuse (polymérisation en émulsion, par exemple).

Alternativement, les monomères peuvent être employés sans que ne se forme de dispersion de monomère dans la phase aqueuse. Dans ce cas, le polymère précipite progressivement et se disperse sous forme des particules (polymérisation en dispersion, typiquement). Par exemple, les monomères peuvent être introduits, de façon progressive au cours de la polymérisation en conservant en permanence une concentration en lesdits monomères inférieures à leur limite de solubilité.

Selon un mode de réalisation particulier, on peut introduire les monomères de façon continue ou semi-continue, dans une phase aqueuse contenant initialement une partie seulement des monomères à une concentration initiale inférieure à la limite de solubilité.

Dans tous les cas, le stabilisant réactif utilisé selon l'invention peut stabiliser l'émulsion ou la dispersion de polymère obtenu en fin de réaction. Dans certains modes de réalisation (polymérisation en émulsion, notamment), il peut aussi stabiliser la dispersion initiale de monomères.

Le stabilisant réactif employé dans l'étape (E1), est typiquement d'un polymère issu d'une étape (E0) de polymérisation radicalaire contrôlée d'une composition comprenant :
- des monomères contenant (et le plus souvent consistant en) des monomères non (N-vinyl lactame) du type précité, identiques ou différents (et généralement identiques);
- un agent de contrôle de la polymérisation radicalaire, par exemple comprenant un groupe thiocarbonylthio -S(C=S)- ; et
- un initiateur de la polymérisation radicalaire qui est typiquement un système redox.

Selon un mode de réalisation particulier de l'invention, l'initiateur de la polymérisation radicalaire employé peut être un système thermique.

Les travaux qui ont été réalisés par les inventeurs à ce sujet ont maintenant permis de mettre en évidence qu'il s'avère possible de réaliser une polymérisation radicalaire à la fois en milieu aqueux et de façon efficacement contrôlée, sous réserve d'amorcer cette réaction radicalaire par le biais d'un système redox.

Selon un autre mode de réalisation, le stabilisant réactif employé dans l'étape (E1) est préparé en milieu solvant organique ou sans solvant. Le cas échéant, il est replacé dans l'eau préalablement à l'étape (E1).

A l'issue de l'étape (E1), on obtient généralement des dispersions de polymères (latex) stables, avec des particules de polymères qui ont une masse et une taille contrôlées, ce qui constitue un autre objet particulier de la présente invention. L'invention peut en particulier donner accès à des latex de polyoléfines fluorées (notamment polymères vinyliques fluorés) exempts de tensioactifs fluorés ou tout au moins présentant un taux de tensioactif bien inférieurs à ceux communément employés.

Différentes caractéristiques et modes de réalisation avantageux du procédé de l'invention vont maintenant être décrits plus en détails.

### Le stabilisant réactif

Les stabilisants réactifs employés dans l'étape (E1) peuvent être employés seuls ou en association avec d'autres stabilisants. Ainsi, selon un mode de réalisation intéressant, l'étape (E1) est conduite en l'absence d'autres agents de stabilisation, notamment en l'absence d'agents tensioactifs. Néanmoins, selon un autre mode de réalisation envisageable, l'étape (E1) peut être conduite en mettant en oeuvre les agents stabilisants réactifs de l'invention avec d'autres co-stabilisants, par exemples des tensioactifs.

Le stabilisant réactif employé dans l'étape (E1) peut typiquement être employé à une concentration massique allant de 0,01% à 50%.

Le ratio massique polymère/stabilisant qui reste généralement supérieur à 0,005, de préférence supérieur à 0,01, par exemple supérieur à 0,02, notamment pour assurer un effet de stabilisation suffisant. Ce ratio massique polymère/stabilisant n'a généralement pas besoin d'être supérieur à 400, et il est typiquement inférieur ou égal à 100, voire inférieur ou égal à 50. Ainsi, ce ratio peut notamment être compris entre 0,005 et 400, par exemple 0,05 et 300, notamment entre 0,02 et 50.

### Le groupe thiocarbonylthio du stabilisant réactif

Ce groupe est typiquement introduit via l'agent de contrôle employé dans la polymérisation radicalaire contrôlée mise en oeuvre dans l'étape (E0), qui est typiquement un agent de contrôle RAFT ou MADIX. Selon un mode de réalisation particulier, cet agent de contrôle employé dans l'étape (E0) peut être porteur de plusieurs groupes thiocarbonylthio.

Le groupe thiocarbonylthio présent sur le stabilisant réactif répond typiquement à la formule -S(C=S)-Z où Z est tel que fini ci-dessous, ce groupe étant typiquement obtenu en mettant en oeuvre dans l'étape (E0) un agent de contrôle qui répond à la formule (A) ci-dessous : 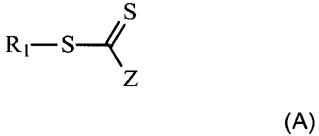 où:
- Z représente :
   - un atome d'hydrogène,
   - un atome de chlore,
   - un radical alkyl éventuellement substitué, aryl éventuellement substitué,
   - un hétérocycle éventuellement substitué,
   - un radical alkylthio éventuellement substitué,
   - un radical arylthio éventuellement substitué,
   - un radical alkoxy éventuellement substitué,
   - un radical aryloxy éventuellement substitué,
   - un radical amino éventuellement substitué,
   - un radical hydrazine éventuellement substitué,
   - un radical alkoxycarbonyl éventuellement substitué,
   - un radical aryloxycarbonyl éventuellement substitué,
   - un radical carboxy, acyloxy éventuellement substitué,
   - un radical aroyloxy éventuellement substitué,
   - un radical carbamoyle éventuellement substitué,
   - un radical cyano,
   - un radical dialkyl- ou diaryl-phosphonato,
   - un radical dialkyl-phosphinato ou diaryl-phosphinato,
      ou
   - une chaîne polymère
   et
- R₁ représente :
   - un groupe alkyle, acyle, aryle, aralkyle, alcène ou alcyne éventuellement substitué,
   - un cycle carboné ou un hétérocycle, saturé ou non, aromatique éventuellement substitué, ou
   - une chaîne polymère.

Les groupes R₁ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, R₁ est un groupe alkyle substitué ou non, de préférence substitué.

Les groupes alkyle, acyle, aryle, aralkyle ou alcyne éventuellement substitués auxquels il est fait référence dans la présente description présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes au sens de la présente description sont des radicaux généralement de 2 à 10 atomes de carbone, ils présentent au moins une insaturation acétylénique, tel que le radical acétylenyle.

Les groupes acyle au sens de la présente description sont des radicaux présentant généralement de 1 à 20 atomes de carbone avec un groupement carbonyle.

Parmi les radicaux aryle utilisable selon l'invention, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque R₁ ou Z est une chaîne polymère, cette chaîne polymère peut être issue d'une polymérisation radicalaire ou ionique ou issue d'une polycondensation.

Dans le cadre de la présente invention, il est notamment intéressant d'employer à titre d'agents de contrôle des xanthates, des dithiocarbamates, ou des dithiocarbazates.

Avantageusement, on utilise, comme agent de contrôle dans l'étape (E0), des composés xanthates, comme par exemple le O-ethyl-S-(1-methoxycarbonyl ethyl) xanthate de formule (CH₃CH(CO₂CH₃))S(C=S)OCH₂CH₃, et, plus généralemement, le stabilisant réactif de l'étape (E1) est de préférence porteur de tels groupes.

Un agent de contrôle bien adapté à la mise en oeuvre de l'étape (E0) est le composé commercialisé par la société Rhodia sous le nom de Rhodixan A1.

### Les sources de radicaux libres utilisables dans les étape (E0) et (E1)

Les sources de radicaux libres employés dans les étapes (E0) et (E1) peuvent être identiques ou différentes, et elles sont typiquement identiques pour des raisons pratiques.

Une source de radicaux libre adaptée aussi bien dans l'étape (E0) que dans l'étape (E1) est un initiateur de polymérisation de type Redox qui comprend deux agents, à savoir un agent oxydant et un agent réducteur, qui peuvent être introduits simultanément ou bien consécutivement.

Selon un mode de réalisation intéressant, les agents réducteur et oxydant sont introduit de façon séparée, ce qui permet de retarder l'amorçage de la polymérisation jusqu'à l'introduction du second agent. Avantageusement, une étape employant un tel agent redox est conduite (i) en formant d'abord un mélange comprenant l'un des agents oxydant ou réducteur en mélange avec les monomères et l'agent de contrôle (qui est l'agent de transfert réactif dans l'étape (E1)), puis (ii) en ajoutant à ce mélange l'autre agent (respectivement réducteur ou oxydant).

Les effets avantageux mis en évidence par les inventeurs dans le cadre de la présente invention sont, en général, d'autant plus marqués que la différence entre les potentiels redox standards de l'oxydant et du réducteur (Eₒₓ-E_{red}) est importante. Il est préconisé dans ce cadre de l'invention que la différence entre les potentiels rédox standards de l'agent oxydant et de l'agent réducteur (Eₒₓ-E_{red}) soit comprise entre 1 et 2 V. Par ailleurs, il peut être intéressant que le potentiel redox standard d'oxydation Eₒₓ de l'agent oxydant (Ox) mis en oeuvre dans l'étape (E0) soit inférieur (de préférence d'au moins 0,2V, plus préférentiellement d'au moins 0,5 V, voire d'au moins 1V) à celui des monomères employés.

Des agents oxydant particulièrement bien adaptés dans ce cadre sont les hydroperoxydes, et notamment l'hydroperoxyde de tertbutyle (t-BuOOH). Le peroxyde d'hydrogène est un autre agent oxydant possible.

D'autre part, il est préférable que les agents présents dans le système redox ne contiennent pas d'acides de nature à induire des réactions parasites des monomères propres à conduire à des sous produits non recherché, et plus généralement qu'ils ne contiennent pas de composés ayant un pKa suffisamment faible pour induire de telles réactions. Ainsi, de préférence, il est notamment préconisé d'employer des agents réducteur (Red) et oxydant (Ox) ayant un pKa supérieur à 4, plus préférentiellement supérieur à 6, voire à 6,5, et de préférence d'au moins 7, ce qui permet de réduire le taux de sous-produits, généralement à tout au plus quelques % dans le polymère synthétisé. Dans ce cadre, un agent réducteur particulièrement adapté est le sulfite de sodium (pKa=7,2).

Des systèmes redox bien adaptés à la mise en oeuvre des étapes (E0) et (E1) du procédé de l'invention comprennent de l'hydroperoxyde de tertbutyle (t-BuOOH) à titre d'agent oxydant, associé à un agent réducteur choisi parmi l'acide ascorbique ou le sulfite de sodium.

Le système redox hydroperoxyde de tertbutyle/sulfite de sodium s'avère tout particulièrement intéressant. L'emploi de ce système dans l'étape (E0) permet de polymériser à température ambiante et dans l'eau avec un très faible taux de sous-produits, restant typiquement bien inférieur à 5%.

### Les conditions de mise en oeuvre des étapes (E0) et (E1)

Compte tenu de la mise en oeuvre du système redox dans l'étape (E0) cette étape est avantageusement conduite en milieu aqueux, typiquement en utilisant de l'eau à titre d'unique solvant. Elle permet ainsi d'obtenir un polymère directement en milieu aqueux sans avoir à utiliser de solvants organiques, ce qui rend le procédé particulièrement adapté à une utilisation à l'échelle industrielle.

Par ailleurs, les étapes (E0) et (E1) sont avantageusement mises en oeuvre à basse température, de préférence en dessous de 40°C, plus avantageusement à une température inférieure ou égale à 30°C, notamment entre 5 et 25°C. Ces deux étapes peuvent donc être réalisées par exemple à température ambiante, ce qui est un autre avantage du procédé de l'invention, en termes de coûts énergétiques.

Les blocs polymères préparés dans les étapes (E0) et (E1) peuvent être des homopolymères ou bien des copolymères statistiques (ou à gradient, en particulier dans l'étape (E0)).

### Les monomères utilisables dans (E1)

Les monomères halogénés utilisables dans l'étape (E1) incluent notamment le chlorure de vinyle H2C=CHCl (VC), le chlorure de vinydilène H2C=CCl2 (VC2), le fluorure de vinyle (VF), le fluorure de vinylidène (VDF), l'hexafluoropropène (HFP), le 3,3,3-trifluoropropene (TFP), le tétrafluoroéthylène (TFE), le chlorotrifluoroéthylène (CTFE), ou bien encore les perfluorovinylether (PFVE), comme le perfluorométhylvinylether (PFMVE). Ces monomères peuvent être homopolymérisés ou copolymérisés dans l'étape (E1), entre eux, ou avec d'autres monomères éthyléniquement insaturés, halogénés ou non (typiquement moins de 50% en mole de monomère non halogéné, le cas échéant).

### Les dispersions de Polymères synthétisés selon l'invention

Quelle que soit la nature des monomères employés, l'étape (E1) permet d'accéder à des dispersions de polymère. Typiquement, il s'agit un latex comprenant des particules dispersées formées de polymères séquencés issus de la polymérisation radicalaire contrôlée tels qu'obtenus à l'issue de l'étape (E1) qui contiennent des particules dispersées formées de polymères séquencés issus de la polymérisation radicalaire contrôlée conduite dans cette étape, chacun de ces polymères à bloc comprenant :
- un premier bloc, généralement hydrophile, ou éventuellement amphiphile, correspondant à la chaîne polymère des stabilisants réactifs employés dans l'étape (E1) ; et
- lié de façon covalente à ce premier bloc, un deuxième bloc, hydrophobe, comprenant une chaîne polymère résultant de la polymérisation des monomères éthyléniquement insaturés employés dans l'étape (E1), généralement terminée par le groupe réactif thiocarbonylthio (xanthate par exemple) initialement présent sur le stabilisant réactif employé dans l'étape (E1)

Compte tenu des conditions de mise en oeuvre de l'étape (E1), les polymères à bloc issus de cette étape s'agencent, schématiquement, au sein de chaque particule pour former un « coeur " de particule à base des blocs hydrophobes et une « coquille » extérieure à base des chaînes polymères initialement présents sur le stabilisant réactif, liées de façon covalente aux chaînes du coeur.

Les latex ainsi obtenus présentent l'avantage d'être stables sans nécessiter la présence d'agents tensioactifs. Bien que la mise en oeuvre d'un tensioactif additionnel ne soit pas exclue, il est le plus souvent intéressant qu'aucun tensioactif additionnel ne soit mis en oeuvre dans l'étape (E1) ou postérieurement à celle-ci. ce qui permet d'obtenir des latex exempts de tensioactifs. L'immobilisation de l'agent stabilisant sur la particule par greffage covalent, intrinsèque à la mise en oeuvre de l'étape (E1), participe à la stabilisation du latex, en inhibant les phénomènes de désorption qu'on observe quand on emploie des tensioactifs usuels au lieu des agents stabilisants réactifs de l'invention.

Par ailleurs, la mise en oeuvre de l'étape (E1) permet d'obtenir une chimie de surface contrôlée à la surface des particules du latex, modulable en fonction de la nature de la chaîne polymère des stabilisants réactifs sur laquelle des groupes réactifs peuvent être introduits :
- avant l'étape (E1) :notamment en introduisant des monomères, fonctionnalisés ou non, dans l'étape (E0) ; et/ou
- après l'étape (E1): par exemple par réaction de greffage *via* des groupes présents sur les chaînes polymères immobilisées à la surface des particules du latex.

L'utilisation de la polymérisation radicalaire contrôlée dans l'étape (E1) permet par ailleurs un contrôle extrêmement fin de la masse moléculaire en nombre Mn des polymères synthétisés, et ce de façon très simple et directe. Partant, l'étape (E1) permet un contrôle fin très aisé de la taille des particules formées, ce qui peut être utilisé notamment pour optimiser la stabilité colloïdale. De plus, on obtient des particules de polymères qui tendent, de la même façon à avoir des diamètres homogènes et resserrés autour d'une valeur moyenne.

Les polymères obtenus selon l'étape (E1) sous la forme de particules présentent un caractère vivant et peuvent donc, dans l'absolu, être utilisés à titre de polymères vivants pour la synthèse ultérieure de copolymères séquencés sur lesquels un troisième bloc sera greffé. Dans ce cadre, les polymères obtenus dans l'étape (E1) peuvent être utilisés à titre d'agents de contrôle dans une étape de polymérisation postérieure à l'étape (E1).

Le plus souvent, toutefois, ces polymères sont employés à l'état de latex. Dans ce cas, il peut être souhaitable de désactiver l'extrémité réactive des polymères obtenu à l'issue de l'étape (E1). Cette désactivation peut être opérée après l'étape (E1), ou bien elle peut terminer cette étape (par exemple, elle peut être mise en oeuvre lorsque la taille la masse moléculaire souhaitée ou le diamètre des particules du latex attendu est atteint). Dans ce cadre, le procédé comprend alors, après l'étape (E1), une étape (E2) de traitement chimique de l'extrémité de chaîne. Par exemple, lorsque le stabilisant réactif employé dans l'étape (E1) est un xanthate, l'extrémité réactive xanthate obtenue sur le polymère peut être désactivée pour priver le polymère de son caractère vivant, par exemple par action de peroxyde d'hydrogène ou par action d'un organoperoxyde ou bien encore d'ozone, qui oxyde l'extrémité réactive xanthate en diverses espèces oxydées (notamment de type thioester -S(C=O)- et -SO₃H).

Les latex obtenus à l'issue de l'étape (E1) peuvent être employés dans un très grand nombre d'applications, notamment pour la réalisation de peintures, revêtements et adhésifs, pour la préparation de matériaux de construction, ou bien encore dans des compositions cosmétiques ou de soin corporel, dans des formulations phytosanitaires ou destinées au domaine de l'agriculture ou bien encore dans des fluides pour l'extraction pétrolière.

Selon un mode de réalisation particulier, la dispersion de polymère issue de l'étape (E1) qui comprend des polymères séquencés issus de la polymérisation radicalaire contrôlée tels qu'obtenus à l'issue de l'étape (E1), organisés sous forme de micelles, utilisables à titre de site de polymérisation pour des polymérisations radicalaires contrôlées.

L'invention et ses avantages seront encore davantage illustrés par les exemples de mise en oeuvre donnés ci-après.

### Exemple 1 : Polymérisation en émulsion de chlorure de vinylidene (VDC) en présence de Polyacrylamide-Xa

Dans un ballon de 250ml à température ambiante (20°C), on a introduit 10 g de VDC 59 g d'eau distillée, 0,47 g de Polyacrylamide-Xa (Xa=Rhodixan A1, Mn=3000 g/mol, synthétisé selon Taton et al. Macromol. Rapid Commun. 2001, 22, 18, 1497) et 0,26 g d'une solution d'hydroperoxyde de tertbutyle (70 % massique dans l'eau).

Le mélange réactionnel a été refroidi à 10°C et dégazé par un léger bullage d'azote pur pendant 5 minutes sous agitation (barreau magnétique). Ensuite, 0,26g de sulfite de sodium a été ajouté en une fois sous courant d'azote.

On a laissé le milieu réactionnel sous agitation pendant 3h heures à 10°C (+/- 5°C).

A l'issue de la réaction, une conversion de 91 % a été déterminée par gravimétrie.

Une analyse en diffusion de la lumière statique (Malvern Zetasizer) fournit les valeurs en diamètre de particule Dz de 241 nm et une polydispersité de particules de 0.04.

### Exemple 2 : Polymérisation en émulsion de chlorure de vinylidene (VDC) en présence de Poly(acide acrylique)-Xa

Dans un ballon de 250ml à température ambiante (20°C), on a introduit 10 g de VDC 59 g d'eau distillée, 0,47 g de Polyacide acrylique-Xa (Xa=Rhodixan A1, Mn=3200 g/mol, synthétisé selon Taton et al. Macromol. Rapid Commun. 2001, 22, 18, 1497) et 0,26 g d'une solution d'hydroperoxyde de tertbutyle (70 % massique dans l'eau).

Le mélange réactionnel a été refroidi à 10°C et dégazé par un léger bullage d'azote pur pendant 5 minutes sous agitation (barreau magnétique). Ensuite, 0,26 g de sulfite de sodium a été ajouté en une fois sous courant d'azote.

On a laissé le milieu réactionnel sous agitation pendant 3h heures à 10°C (+/- 5°C).

A l'issue de la réaction, une conversion de 89 % a été déterminée par gravimétrie.

Une analyse en diffusion de la lumière statique (Malvern Zetasizer) fournit les valeurs en diamètre de particule Dz de 195 nm et une polydispersité de particules de 0.03.

## Revendications

1. Procédé de polymérisation en phase dispersée de composés vinyliques halogénés, répondant à la formule R_{b}R_{c}C=CX¹X²,
où: X¹ = F ou Cl
X² = H, F ou Cl
chacun de R_{b} et R_{c} represente, indépendamment :
- H, Cl, F ; ou
- un groupe alkyle, de préférence chloré et /ou fluoré, plus avantageusement perchloré ou perfluoré,
comprenant une étape (E1), où ces monomères sont introduit au sein d'une phase aqueuse, ensemble avec
- au moins une source de radicaux libres ; et
- au moins un stabilisant réactif comprenant une chaîne polymère et un groupe thiocarbonylthio -S(C=S)-, cette chaîne polymère comprenant des unités monomères non (N-vinyl lactame).

2. Procédé selon la revendication 1 où dans l'étape (E1), les unités monomère non (N-vinyl lactame) peuvent être choisies parmi :
- les monomères hydrophiles de type acrylate, comme par exemple l'acide acrylique et ses sels tel que acrylate de sodium ainsi que les esters de l'acide acrylique soluble dans l'eau, comme par exemple l'acrylate de 2-hydroxy ethyl ou les acrylates d'oligo ou polyéthylène glycol.
les monomères hydrophiles de type acrylamido comme par exemple l'acrylamide, dimethyl acrylamide, 2-acrylamido-2-methyl-1-propane sulfonique acide et ses sels, acrylamido propyl trimethyl ammonium chloride (APTAC), diméthyle aminopropyl acrylamide, N-diethyl acrylamide, N-isopropyl acrylamide, N-morpholine acrylamide, N-hydroxy ethyl acrylamide.
- les monomères hydrophiles de type methacrylate par exemple l'acide methacrylique et ses sels tel que le methacrylate de sodium ainsi que les methacrylate d'oligo ou polyéthylène glycol, 3-[N-(3-methacrylate de propyl)-N,N-dimethyl]ammoniopropane sulfonate), hydroxyethyl methacrylate.
- les monomères hydrophiles de type methacrylamido comme par exemple le methacrylamide, 3-[N-(3-methacrylamidopropyl)-N,N-dimethyl]ammoniopropane sulfonate)) (SPP), [(3-methacrylamidopropyl)-N,N-trimethyl ammonium chloride (MAPTAC).
- les monomères hydrophiles de type vinylique par exemple acide vinyl phosphonique, vinyl sulphonate de sodium, 2-vinyl pyridine, 4-vinyl pyridine, et ses versions quaternisées et imidazole de vinyle
- les monomères hydrophiles de type allylique par exemple le chlorure de diallyldiméthylammonium (DADMAC), le diallyl de dimethylammoniummethyl phosphonate (DALP).

3. Procédé selon la revendication 1 où dans l'étape (E1), les monomères vinyliques halogénés sont à l'état dispersé.

4. Procédé selon la revendication 1 où l'étape (E1) est conduite à une température inférieure à 40°C, de préférence inférieure ou égale à 30°C.

5. Procédé selon la revendication 4, où la source de radicaux libre employée dans l'étape (E1) est un initiateur de polymérisation redox.

6. Procédé selon la revendication 5, où l'initiateur redox comprend de l'hydroperoxyde de tertbutyle (t-BuOOH) à titre d'agent oxydant, associé à un agent réducteur choisi parmi l'acide ascorbique ou le sulfite de sodium.

7. Procédé selon la revendication 1 à 6, où le groupement thiocarbonylthio présent sur le stabilisant réactif est un xanthate ou un dithiocarbamate, de préférence un xanthate.

8. Dispersions de polymères susceptibles d'être obtenu selon le procédé de l'une des revendications 1 à 7.

9. Dispersion selon la revendication 8, qui est un latex comprenant des particules dispersées formées de polymères séquencés issus de la polymérisation radicalaire contrôlée tels qu'obtenus à l'issue de l'étape (E1) de la revendication 1.

10. Utilisation d'une dispersion selon la revendication 9, pour la réalisation de peintures, revêtements, adhésifs, pour la préparation de matériaux de construction, dans des compositions cosmétiques ou de soin corporel, dans des formulations phytosanitaires ou destinées au domaine de l'agriculture ou dans des fluides pour l'extraction pétrolière.

11. Dispersion selon la revendication 10, qui comprend des polymères séquencés issus de la polymérisation radicalaire contrôlée tels qu'obtenus à l'issue de l'étape (E1) de la revendication 1, organisés sous forme de micelles, utilisables à titre de site de polymérisation pour des polymérisations radicalaires contrôlées.

## Patentansprüche

1. Verfahren zur Polymerisation von halogenierten Vinylverbindungen der Formel R_{b}R_{c}C=CX¹X²,
wobei: X¹ = F oder Cl
X² = H, F oder Cl
R_{b} und R_{c} jeweils unabhängig für
- H, Cl, F oder
- eine Alkylgruppe, die vorzugsweise chloriert und/oder fluoriert ist und noch vorteilhafter perchloriert oder perfluoriert ist,
stehen,
in disperser Phase, umfassend einen Schritt (E1), in dem diese Monomere zusammen mit
- mindestens einer Radikalquelle und
- mindestens einem reaktiven Stabilisator, der eine Polymerkette und eine Thiocarbonylthiogruppe -S(C=S)- umfasst, wobei diese Polymerkette Nicht-(N-Vinyllactam)-Monomereinheiten umfasst,
in eine wässrige Phase eingetragen werden.

2. Verfahren nach Anspruch 1, bei dem in Schritt (E1) die Nicht-(N-Vinyllactam)-Monomereinheiten aus :
- hydrophilen Monomeren vom Acrylat-Typ, wie beispielsweise Acrylsäure und Salzen davon wie Natriumacrylat sowie wasserlöslichen Acrylsäureestern, wie beispielsweise 2-Hydroxyethylacrylat oder Oligo- oder Polyethylenglykolacrylaten,
- hydrophilen Monomeren vom Acrylamido-Typ, wie beispielsweise Acrylamid, Dimethylacrylamid, 2-Acrylamido-2-methyl-1-propansulfonsäure und Salzen davon, Acrylamidopropyltrimethylammoniumchlorid (APTAC), Dimethylaminopropylacrylamid, N,N-Diethylacrylamid, N-Isopropylacrylamid, N-Morpholinacrylamid oder N-Hydroxyethylacrylamid,
- hydrophilen Monomeren vom Methacrylat-Typ, beispielsweise Methacrylsäure und Salzen davon wie Natriummethacrylat sowie Oligo- oder Polyethylenglykolmethacrylaten, 3-[N-(3-Propylmethacrylat)-N,N-dimethyl]ammoniopropansulfonat) oder Hydroxyethylmethacrylat,
- hydrophilen Monomeren vom Methacrylamido-Typ, wie beispielsweise Methacrylamid, 3-[N-(3-Methacrylamidopropyl)-N,N-dimethyl]ammoniopropansulfonat (SPP) oder [(3-Methacrylamidopropyl)-N,N-trimethylammoniumchlorid (MAPTAC),
- hydrophilen Monomeren vom Vinyl-Typ, beispielsweise Vinylphosphorsäure, Natriumvinylsulfonat, 2-Vinylpyridin, 4-Vinylpyridin und quaternisierten Versionen davon und Vinylimidazol,
- hydrophilen Monomeren vom Allyl-Typ, beispielsweise Diallyldimethylammoniumchlorid (DADMAC) oder Diallyldimethylammoniummethylphosphonat (DALP),
ausgewählt sein können.

3. Verfahren nach Anspruch 1, bei dem in Schritt (E1) die halogenierten Vinylmonomere in disperser Form vorliegen.

4. Verfahren nach Anspruch 1, bei dem Schritt (E1) bei einer Temperatur von weniger als 40°C, vorzugsweise kleiner gleich 30°C, durchgeführt wird.

5. Verfahren nach Anspruch 4, bei dem es sich bei der in Schritt (E1) eingesetzten Radikalquelle um einen Redoxpolymerisationsinitiator handelt.

6. Verfahren nach Anspruch 5, bei dem der Redoxinitiator tert.-Butylhydroperoxid (t-BuOOH) als Oxidationsmittel in Kombination mit einem aus Ascorbinsäure und Natriumsulfit ausgewählten Reduktionsmittel umfasst.

7. Verfahren nach einem der Ansprüche 1 bis 6, bei dem es sich bei der an dem reaktiven Stabilisator vorliegenden Thiocarbonylthiogruppe um ein Xanthat oder ein Dithiocarbamat, vorzugsweise ein Xanthat, handelt.

8. Polymerdispersionen, die nach dem Verfahren gemäß einem der Ansprüche 1 bis 7 erhältlich sind.

9. Dispersion nach Anspruch 8, bei der es sich um einen Latex handelt, der dispergierte Teilchen umfasst, die aus wie am Ende von Schritt (E1) gemäß Anspruch 1 erhaltenen Blockpolymeren, die aus der kontrollierten Radikalpolymerisation stammen gebildet sind.

10. Verwendung einer Dispersion nach Anspruch 9 zur Herstellung von Anstrichmitteln, Beschichtungen oder Klebstoffen, zur Herstellung von Baustoffen, in kosmetischen Zusammensetzungen oder Körperpflegezusammensetzungen, in Pflanzenschutzformulierungen oder Foirnulierungen für die Landwirtschaft oder in Fluiden für die Erdölförderung.

11. Dispersion nach Anspruch 10, die wie am Ende von Schritt (E1) gemäß Anspruch 1 erhaltene Blockpolymere umfasst, die aus der kontrollierten Radikalpolymerisation stammen und in Form von Mizellen organisiert sind, die als Polymerisationsort für kontrollierte Radikalpolymerisationen verwendbar sind.

## Claims

1. Process for dispersed-phase polymerization halogenated vinyl compounds corresponding to the formula R_{b}R_{c}C=CX¹X²,
in which : X¹ = F or Cl
X² = H, F or Cl
each one from among R_{b} and R_{c} represents, independently :
- H, Cl, F; or
- an alkyl group, preferably chlorinated and/or fluorinated, more advantageously perchlorinated or perfluorinated,
comprising a step (E1), in which these monomers are introduced into an aqueous phase together with
- at least one source of free radicals; and
- at least one reactive stabilizer comprising a polymer chain and a thiocarbonylthio group -S(C=S)-, this polymer chain comprising non-N-(vinyllactam) monomer units.

2. Process according to Claim 1, in which, in step (E1), the non-N-vinylactam monomer units may be chosen from :
- hydrophilic monomers of acrylate type, for instance acrylic acid and salts thereof such as sodium acrylate, and also water-soluble acrylic acid esters, for instance 2-hydroxyethyl acrylate or oligo or polyethylene glycol acrylates;
- hydrophilic monomers of acrylamido type, for instance acrylamide, dimethylacrylamide, 2-acrylamido-2-methyl-1-propanesulfonic acid and salts thereof, acrylamidopropyltrimethylammonium chloride (APTAC), dimethylaminopropylacrylamide, N,N-diethylacrylamide, N-isopropylacrylamide, N-morpholineacrylamide or N-hydroxyethylacrylamide;
- hydrophilic monomers of methacrylate type, for example methacrylic acid and salts thereof such as sodium methacrylate and also oligo or polyethylene glycol methacrylates, 3-[N-(3-propyl methacrylate)-N,N-dimethyl]ammoniopropane sulfonate), hydroxyethyl methacrylate;
- hydrophilic monomers of methacrylamido type, for instance methacrylamide, 3-[N-(3-methacrylamidopropyl)-N,N-dimethyl]ammoniopropane sulfonate (SPP), [(3-methacrylamidopropyl)-N,N-trimethylammonium chloride (MAPTAC);
- hydrophilic monomers of vinyl type, for instance vinylphosphonic acid, sodium vinylsulfonate, 2-vinylpyridine, 4-vinylpyridine, and quaternized versions thereof, and vinylimidazole;
- hydrophilic monomers of allylic type, for example diallyldimethylammonium chloride (DADMAC), diallyl dimethylammoniummethyl phosphonate (DALP).

3. Process according to Claim 1, in which, in step (E1), the halogenated vinyl monomers are in dispersed form.

4. Process according to Claim 5, in which step (E1) is performed at a temperature below 40°C, preferably less than or equal to 30°C.

5. Process according to Claim 4, in which the source of free radicals used in step (E1) is a redox polymerization initiator.

6. Process according to Claim 5, in which the redox initiator comprises tert-butyl hydroperoxide (t-BuOOH) as oxidizing agent, combined with a reducing agent chosen from ascorbic acid and sodium sulfite.

7. Process according to Claims 1 to 6, in which the thiocarbonylthio group present on the reactive stabilizer is a xanthate or a dithiocarbamate, preferably a xanthate.

8. Polymer dispersion which may be obtained according to the process of one of Claims 1 to 7.

9. Dispersion according to Claim 8, which is a latex comprising dispersed particles formed from block polymers derived from the controlled radical polymerization as obtained after step (E1) of Claim 1.

10. Use of a dispersion according to Claim 9, for producing paints, coatings and adhesives, for preparing construction materials, in cosmetic or body care compositions, in plant protection formulations or for the agricultural sector, or in petroleum extraction fluids.

11. Dispersion according to Claim 10, which comprises block polymers derived from the controlled radical polymerization as obtained after step (E1) of Claim 1, organized in the form of micelles, which may be used as a site of polymerization for controlled radical polymerizations.
